# EUROPEAN PATENT APPLICATION

(11) **EP 1 471 406 A1**
(43) Date of publication of application: **27.10.2004**
(21) Application number: 03009441.1
(22) Date of filing: 25.04.2003
(51) Int. Cl.: G06F 1/00

(54) **Method of verifying authorized use of electronic book on an information platform**

(71) Applicant: Culture.com Technology (Macau) Ltd, Macau (CN)
(72) Inventor: Lai, Chen-Chun, 6&(I-L) Macau (CN)
(74) Representative: Manitz, Finsterwald & Partner GbR

(57) **Abstract**

A method is proposed for use by an electronic-book (e-book) supplier to verify whether an information platform is authorized to open an electronic-book (e-book) file, where the electronic-book file can be either downloaded via network or directly fetched from a permanent storage medium such as a memory card or an optical disc. The proposed method is characterized by the use of the unique product identification number of a specific hardware component in the information platform, such as the information platform's CPU serial number, as an embedded authorization identification code in each restrictively-authorized electronic-book file, so that an information platform can open a restrictively-authorized electronic-book file if and only if that information platform's CPU serial number is matched to the embedded authorization identification code in the electronic-book file.

## Description

### BACKGROUND OF THE INVENTION

### 1. Field of the Invention:

This invention relates to information technology, and more particularly, to a method of verifying authorized use of electronic book (e-book) on an information platform, which can be used by an e-book provider to verify whether an information platform is authorized to open an e-book for the user to view the contents thereof.

### 2. Description of Related Art:

An electronic book (e-book) is a book in digitized form, whose contents include computerized text, diagrams, static images, animations, videos, and audios, and which can be reproduced and displayed on a multimedia-capable information platform such as a desktop computer, a notebook computer, a PDA (personal digital assistant), an e-book reader, or the like, for the user to view the contents thereof.

Conventionally, an e-book provider can provide e-books to the customers in various media sources, including, for example, e-book Web site (i.e., downloading via Internet), e-book IC cards, e-book CD/DVD discs, and so on.

In the case of downloading via Internet, the user should first link his/her information platform via the Internet to an e-book Web site installed by the e-book provider; and then select desired e-books from the Web site and download them via the Internet to his/her information platform.

In the case of using an e-book IC card, the user needs just to insert the IC card into a specific expansion slot in his/her information platform to allow the information platform to directly read the e-book file from the IC card. Similarly, in the case of using an e-book CD/DVD disc, the user needs just to insert the CD/DVD disc into the CD/DVD drive on his/her information platform to allow the information platform to directly read the e-book file from the CD/DVD disc.

One problem in the e-book publishing industry, however, is that since an e-book is essentially a package of computer files, it can be easily duplicated by any computer file copying means; and therefore, a single copy of e-book can be easily duplicated and distributed unrestrictedly to any other unauthorized users, thus infringing the copyrights of the e-book providers.

In view of the forgoing problem, there exists therefore a need in the e-book publishing industry for an e-book authorization verifying method that can be used to verify whether a particular information platform is authorized to open a certain e-book.

### SUMMARY OF THE INVENTION

It is therefore an objective of this invention to provide an e-book authorization verifying method for use by an e-book provider to allow e-books to be decrypted and displayed only on authorized information platforms.

It is another objective of this invention to provide an e-book authorization verifying method that can be used to protect the copyrights of e-book providers.

The e-book authorization verifying method according to the invention is intended for use by an e-book provider to allow its e-books to be decrypted and displayed only on an authorized information platform, such as a desktop computer, a notebook computer, a PDA, an e-book reader, or the like. These e-books can be provided to the user through various media sources, such as an e-book Web site (i.e., downloading via Internet) or a permanent data storage device as IC card or CD/DVD disc.

The e-book authorization verifying method according to the invention is characterized by the use of an authorization-specific hardware component's product ID in the information platform as an authorization ID code embedded in the e-book, allowing a certain e-book to be displayable only on an authorized information platform. This feature allows e-books to be decrypted and displayed only on authorized information platforms, thereby protecting the copyrights of e-book providers.

### BRIEF DESCRIPTION OF DRAWINGS

The invention can be more fully understood by reading the following detailed description of the preferred embodiments, with reference made to the accompanying drawings, wherein:
FIG. 1 is a schematic diagram showing various kinds of information platforms reading e-book files from various media sources;
FIG. 2 is a schematic diagram showing the inside architecture of an information platform utilizing the e-book authorization verifying method of the invention; and
FIG. 3 is a flow diagram showing the procedural steps performed by the e-book authorization verifying method according to the invention.

### DETAILED DESCRIPTION OF PREFERRED EMBODIMENTS

Various preferred embodiments of the e-book authorization verifying method according to the invention are disclosed in full details by way of examples in the following with reference to the accompanying drawings.

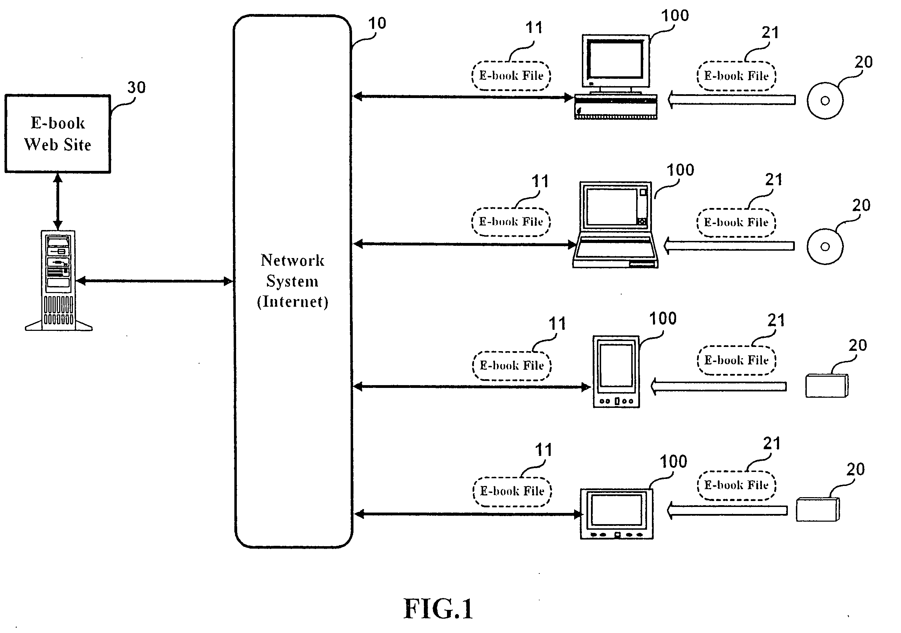

FIG. 1 is a schematic diagram showing various kinds of information platforms **100**, such as desktop computer, notebook computer, PDA (personal digital assistant), e-book reader, and the like, that can read e-book files from various media sources, such as an e-book Web site **30** or various kinds of permanent data storage devices **20** as IC cards or CD/DVD discs.

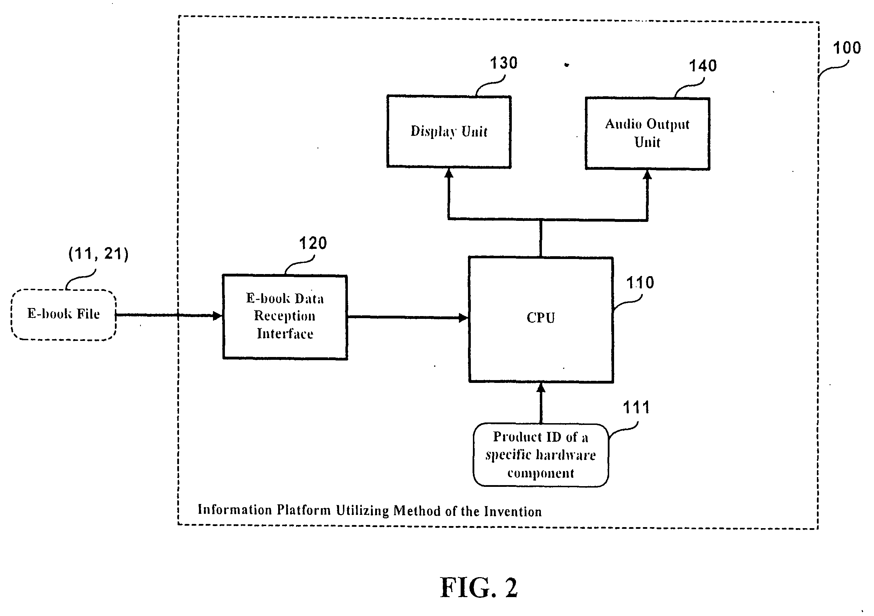

FIG. 2 is a schematic diagram showing the inside architecture of an information platform **100** utilizing the e-book authorization verifying method of the invention. As shown, the information platforms **100** should at least includes: a CPU **110**, an e-book data reception interface **120**, a display unit **130**, and an audio output unit **140**.

In the case of using the e-book Web site **30**, the user should first link his/her information platform **100** via a network system **10**, such as the Internet, to the e-book Web site **30**; and then select desired e-books from the Web site **30** and download the selected e-book files **11** via the Internet **10** to his/her information platform **100.**

In the case of using an e-book IC card (i.e., permanent data storage devices **20),** the user needs just to insert the IC card into a specific expansion slot (not shown) in his/her information platform **100** to allow the information platform **100** to directly read the e-book file **21** from the IC card. Similarly, in the case of using an e-book CD/DVD disc, the user needs just to insert the CD/DVD disc into the CD/DVD drive (not shown) on his/her information platform **100** to allow the information platform **100** to directly read the e-book file **21** from the CD/DVD disc.

Due to limited authorization, the e-book files **11** downloaded from the e-book Web site **30** and the e-book files **21** stored in the permanent data storage devices (IC card or CD/DVD disc) **20** are all encrypted files-that can be decrypted only by an authorized information platform utilizing the e-book authorization verifying method of the invention.

The method of the invention is characterized by that each of the e-book files **11, 21** is pre-embedded with an authorization ID code that is matched to a specific hardware component's product ID in the information platform **100**, such as the product ID of the CPU **110** in the information platform **100**.

In various other embodiments, for example, the authorization ID code can also be the product ID of the display unit **130**, the product ID of the audio output unit **140**, the product ID of the CD/DVD drive (not shown), the product ID of the e-book reader, and so on.

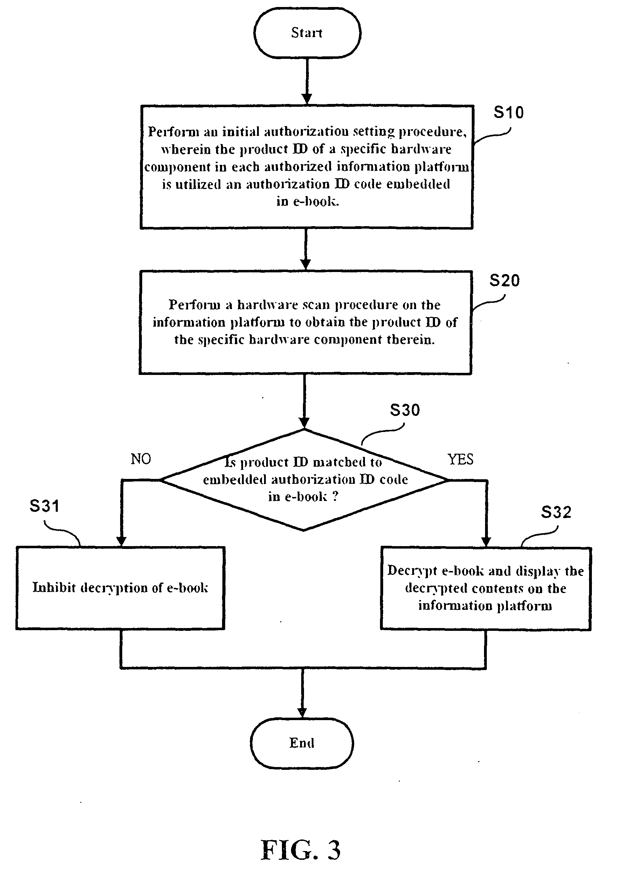

FIG. 3 is a flow diagram showing the procedural steps performed by the e-book authorization verifying method according to the invention for verifying whether the information platform **100** is authorized to open the e-book files **11, 21.**

Referring to FIG. 3 together with FIG. 2, the first step **S10** is to perform an initial authorization setting procedure, wherein the product ID of a specific hardware component in each authorized information platform **100**, such as the product ID of the CPU **110** in the information platform **100**, is utilized as an authorization ID code and embedded in the e-book files **11,21**. Alternatively, the authorization ID code can also be the product ID of the display unit **130**, the product ID of the audio output unit **140**, the product ID of the CD/DVD drive (not shown), the product ID of the e-book reader, and so on.

In the case of downloading from the e-book Web site **30**, the e-book provider can, for example, provide a list of all authorization ID codes on the e-book Web site **30** and check whether a linked information platform **100** is authorized to download e-book files from the e-book Web site **30** by checking the product ID of the specific hardware component in the linked information platform **100** which is uploaded to the e-book Web site **30**. If matched, the linked information platform **100** is then allowed to download a selected e-book. Alternatively, the authorization ID code can be embedded into the user-selected e-book and then downloaded to the linked information platform **100**.

In the case of using the permanent data storage devices **20** (IC card or CD/DVD), the authorization ID code is pre-embedded into each of the e-book files **21** recorded on the permanent data storage devices **20**.

In the next step **S20,** a hardware scan procedure is performed to scan the hardware of the information platform **100** to obtain the authorization-specific hardware component's product ID **111** in the information platform **100** (in this embodiment, the authorization-specific hardware component's product ID **111** is the product ID of the CPU **110**).

In the next step **S30,** an ID comparison procedure is performed to check whether the authorization-specific hardware component's product ID **111** in the information platform **100** is matched to the embedded authorization ID code in the e-book file **11/21;** if NO, the procedure goes to the step **S31;** and whereas if YES, the procedure goes to the step **S32.**

In the step **S31,** a decryption-inhibiting procedure is performed to inhibit the information platform **100** from decrypting the e-book file **11**/**12** so as to make the user unable to read the contents of the e-book file 11/21.

In the step **S32,** a decrypting procedure is performed to decrypt the e-book file **11/12** and then display the visible part (i.e., text, diagrams, static images, animations, videos) of the decrypted contents of the e-book file **11/12** on the display unit **130** and reproduce the audio part of the decrypted contents of the e-book file **11/12** through the audio output unit **140,** thus allowing the user to view and hear the contents of the e-book file **11**/**21** on the information platform **100**.

In conclusion, the invention provides an e-book authorization verifying method for use on an information platform, such as a desktop computer, a notebook computer, a PDA, an e-book reader, or the like, for the purpose of verifying the authorized of use of e-book on the information platform, which is characterized by the use of an authorization-specific hardware component's product ID in the information platform as an authorization ID code embedded in the e-book, allowing a certain e-book to be displayable only on an authorized information platform. This feature allows e-books to be decrypted and displayed only on authorized information platforms, thereby protecting the copyrights of the e-book providers.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A method of verifying authorized use of an e-book on an information platform, which comprises:
performing an initial authorization setting procedure, wherein the product ID of a specific hardware component in each authorized information platform is utilized as an authorization ID code embedded in the e-book;
performing a hardware scan procedure, which is performed when the information platform is attempting to open the e-book, for scanning the hardware configuration of the information platform to obtain the product ID of the authorization-specific hardware component's product ID in the information platform; and
performing an ID comparison procedure, wherein the scanned authorization-specific hardware component's product ID from the information platform is compared against the embedded authorization ID code in the e-book;
if unmatched, performing a decryption-inhibiting procedure on the e-book; and otherwise
if matched, performing a decryption procedure on the e-book to allow its contents to be displayed on the information platform.

2. The method of claim 1, wherein in the initial authorization setting procedure, the authorization-specific hardware component's product ID is a CPU's product ID in the information platform.

3. The method of claim 1, wherein the e-book is downloaded to the information platform via a network system from an e-book Web site.

4. The method of claim 1, wherein the e-book is read from a permanent data storage device.

5. The method of claim 4, wherein the permanent data storage device is an e-book IC card.

6. The method of claim 4, wherein the permanent data storage device is an e-book CD/DVD disc.

7. An e-book authorization verifying method for use on an information platform to verify whether the information platform is authorized to open an e-book downloaded via a network system from an e-book Web site;
the e-book authorization verifying method comprising:
performing an initial authorization setting procedure, wherein the product ID of a specific hardware component in each authorized information platform is utilized as an authorization ID code embedded in the e-book downloaded from the e-book Web site;
performing a hardware scan procedure, which is performed when the information platform is attempting to open the e-book downloaded from the e-book Web site, for scanning the hardware configuration of the information platform to obtain the product ID of the authorization-specific hardware component's product ID in the information platform; and
performing an ID comparison procedure, wherein the scanned authorization-specific hardware component's product ID from the information platform is compared against the embedded authorization ID code in the e-book downloaded from the e-book Web site;
if unmatched, performing a decryption-inhibiting procedure on the e-book; and otherwise
if matched, performing a decryption procedure on the e-book to allow its contents to be displayed on the information platform.

8. The method of claim 7, wherein in the initial authorization setting procedure, the authorization-specific hardware component's product ID is a CPU's product ID in the information platform.

9. An e-book authorization verifying method for use on an information platform to verify whether the information platform is authorized to open an e-book from a permanent data storage device;
the e-book authorization verifying method comprising:
performing an initial authorization setting procedure, wherein the product ID of a specific hardware component in each authorized information platform is utilized as an authorization ID code embedded in the e-book recorded on the permanent data storage device;
performing a hardware scan procedure, which is performed when the information platform is attempting to open the e-book from the permanent data storage device, for scanning the hardware configuration of the information platform to obtain the product ID of the authorization-specific hardware component's product ID in the information platform; and
performing an ID comparison procedure, wherein the scanned authorization-specific hardware component's product ID from the information platform is compared against the embedded authorization ID code in the e-book from the permanent data storage device;
if unmatched, performing a decryption-inhibiting procedure on the e-book; and otherwise
if matched, performing a decryption procedure on the e-book to allow its contents to be displayed on the information platform.

10. The method of claim 9, wherein in the initial authorization setting procedure, the authorization-specific hardware component's product ID is a CPU's product ID in the information platform.

11. The method of claim 9, wherein the permanent data storage device is an e-book IC card.

12. The method of claim 9, wherein the permanent data storage device is an e-book CD/DVD disc.
